# EUROPÄISCHE PATENTANMELDUNG

(11) **EP 2 650 945 A1**
(43) Veröffentlichungstag der Anmeldung: **16.10.2013**
(21) Anmeldenummer: 13161633.6
(22) Anmeldetag: 28.03.2013
(51) Int. Cl.: H01M 2/10, H01M 10/50, H01M 10/052

(54) **Hartschalenbatteriegehäuse mit Temperiereinrichtung**

(30) Priorität: 10.04.2012 DE 102012205810
(71) Anmelder: ROBERT BOSCH GMBH, 70442 Stuttgart (DE); Samsung SDI Co., Ltd., Yongin-si Gyeonggi-do 446-577 (KR)
(72) Erfinder: Woehrle, Thomas, 70469 Stuttgart-Feuerbach (DE); Fetzer, Joachim, 73342 Bad-Ditzenbach (DE); Angerbauer, Ralf, 71696 Möglingen (DE); Ruehle, Andreas, 70374 Stuttgart (DE); Fink, Holger, 70567 Stuttgart (DE); Cicero, Marke, Ortonville, 48642 (US)
(74) Vertreter: Bee, Joachim

(57) **Zusammenfassung**

Die vorliegende Erfindung betrifft ein Hartschalenbatteriegehäuse für ein mindestens zwei Alkalimetallzellen umfassendes galvanisches Element (10), wobei das Hartschalenbatteriegehäuse einen Gehäusegrundkörper (11) mit einem Innenraum zur Aufnahme der Zellkomponenten (30) von mindestens zwei Alkalimetallzellen und einen Gehäusedeckel (12) zum Verschließen des Innenraums des Gehäusegrundkörpers (11) umfasst, wobei der Gehäusegrundkörper (11) zumindest im Wesentlichen aus Kunststoff ausgebildet ist und wobei in dem Gehäusegrundkörper (11) ein Temperiermittelkanal (13) ausgebildet ist. Darüber hinaus betrifft die vorliegende Erfindung ein derartiges galvanisches Element (10), ein Verfahren zu dessen Herstellung sowie ein mit einem derartigen galvanischen Element (10) ausgestattetes mobiles oder stationäres System.

## Beschreibung

Die vorliegende Erfindung betrifft ein Hartschalenbatteriegehäuse, ein damit ausgestattetes galvanisches Element, ein Verfahren zu dessen Herstellung sowie ein mit einem derartigen galvanischen Element ausgestattetes mobiles oder stationäres System.

### Stand der Technik

Es zeichnet sich ab, dass in Zukunft bei stationären Anwendungen, beispielsweise bei Solar- und Windkraftanlagen, bei mobilen Anwendungen, beispielsweise bei Fahrzeugen, wie Hybrid- und Elektrofahrzeugen, und im Consumer-Bereich, beispielsweise bei Laptops und Mobiltelefone, vermehrt Batteriesysteme zum Einsatz kommen werden, an welche sehr hohe Anforderungen bezüglich der Sicherheit, Zuverlässigkeit, Leistungsfähigkeit und Lebensdauer gestellt werden.

Ein wichtiger Parameter der Leistungsfähigkeit ist die Energiedichte, welche beispielsweise in Wattstunden pro Kilogramm (Wh/kg) angegeben wird. Die Kapazität einer Alkalimetallzelle wird durch die sogenannten aktiven beziehungsweise elektrochemisch aktiven Materialien bestimmt. Neben diesen Materialien weisen Alkalimetallzellen auch sogenannten Passivmaterialien, wie Separatoren, Isolatoren, Elektrodenbinder und Gehäuse- beziehungsweise Verpackungselemente auf, deren Gewicht ebenso wie das Gewicht der Aktivmaterialien einen Einfluss auf die Energiedichte hat.

Prädestiniert für ein breites Einsatzgebiet sind insbesondere Lithiumionenzellen, da sich diese unter anderem durch hohe Energiedichten der aktiven Materialien und eine äußerst geringe Selbstentladung auszeichnen. Lithiumionenzellen weisen eine positive Elektrode (Kathode) und eine negative Elektrode (Anode) auf. Das aktive Material der negativen Elektrode (Anode) einer Lithiumionenzelle ist dabei dazu ausgelegt Lithiumionen (Li⁺) reversibel einzulagern (Interkalation) oder wieder auszulagern (Deinterkalation) und wird daher auch als Interkalationsmaterial bezeichnet. Herkömmlicherweise wird Graphit auf der Anodenseite als Interkalationsmaterial eingesetzt.

Ein weiteres attraktives Batterie-System sind wiederaufladbare metallische Lithium-Systeme, welche ebenfalls eine positive Elektrode (Kathode) und negative Elektrode (Anode) aufweisen, bei denen das Aktivmaterial der negativen Elektrode (Anode) jedoch kein lithiuminterkalierendes Material, sondern metallisches Lithium oder eine Lithiumlegierung ist. Die positive Elektrode (Kathode) kann dabei beispielsweise auf einem Übergangsmetalloxid mit Schichtstruktur, wie Lithium-Cobalt-Oxid (LiCoO₂), basieren.

Um eine hohe mechanische Stabilität zu erzielen und hohe Sicherheitsanforderungen, beispielsweise bei Fahrzeugen, zu erfüllen, werden Lithiumionenzellen und Lithiumzellen mit metallischer Lithiumanode für derartige Anwendungen herkömmlicherweise durch rein metallische Hartschalenbatteriegehäuse, so genannte Hardcase-Gehäuse, vor Umwelteinflüssen, insbesondere vor einem Eintritt von Feuchtigkeit in das Zellinnere geschützt. Derzeit werden derartige Hartschalenbatteriegehäuse meist aus Aluminium durch kalte Tiefziehverfahren hergestellt. Neben einem mechanischen Schutz, schützen metallische Hartschalenbatteriegehäuse die Komponenten der darin eingehausten Zellen auch vor Feuchtigkeit, da das metallische Gehäusematerial auch als Feuchtigkeits- beziehungsweise Dampfsperre dient.

Lithiumionenzellen und Lithiumzellen mit einer metallischen Lithiumanode weisen einen definierten Temperaturbereich auf, in dem sie optimal betrieben werden können. Um eine Temperatur innerhalb dieses optimalen Betriebstemperaturbereiches einzustellen, können die Zellen an ein Thermomanagementsystem angeschlossen werden, welches die Zellen, beispielsweise nach einem Start an einem kalten Tag, erwärmt oder, beispielsweise während des Betriebes, kühlt. Dabei können die Zellen mit ihrer Unterseite fest an eine so genannte Kühlplatte thermisch und mechanisch angebunden sein, welche die Zellen temperiert und so eine optimale Arbeitsumgebung für die Zellen schafft.

Eine Temperiervorrichtung ist beispielsweise in der Druckschrift DE 10 2010 001 430 A1 beschrieben.

### Offenbarung der Erfindung

Gegenstand der vorliegenden Erfindung ist ein Hartschalenbatteriegehäuse für ein mindestens zwei Alkalimetallzellen, insbesondere Lithiumzellen, umfassendes galvanisches Element, welches
- einen Gehäusegrundkörper mit einem Innenraum zur Aufnahme der Zellkomponenten von mindestens zwei Alkalimetallzellen, insbesondere Lithiumzellen, und
- einen Gehäusedeckel zum Verschließen des Innenraums des Gehäusegrundkörpers
umfasst, wobei der Gehäusegrundkörper zumindest im Wesentlichen aus Kunststoff ausgebildet ist und wobei in dem Gehäusegrundkörper ein Temperiermittelkanal ausgebildet/integriert ist.

Unter einer Alkalimetallzelle kann insbesondere eine galvanische Zelle verstanden werden, welche als elektrochemisch aktives Material, beispielsweise Anodenmaterial, ein Alkalimetall, wie Lithium oder Natrium, umfasst.

Unter einem galvanischen Element, welches mindestens zwei Alkalimetallzellen umfasst, kann insbesondere eine Batterie beziehungsweise ein sogenanntes Pack oder ein sogenanntes Modul verstanden werden. Dabei kann unter einem Modul insbesondere ein galvanisches Element verstanden werden, welches ≥ 2 bis ≤ 20, beispielsweise ≥ 2 bis ≤ 10, zum Beispiel ≥ 4 bis ≤ 6, Alkalimetallzellen umfasst. Unter einem Pack kann dabei insbesondere ein galvanisches Element verstanden werden, welches zwei oder mehr Module umfasst. Als Batterie kann dabei sowohl ein Modul als auch ein Pack verstanden werden.

Das Hartschalenbatteriegehäuse kann daher insbesondere ein Hartschalenmodulgehäuse oder ein Hartschalenpackgehäuse, insbesondere ein Hartschalenmodulgehäuse, sein.

Unter den Zellkomponenten einer Alkalimetallzelle können insbesondere die elektrochemisch aktiven Komponenten einer Alkalimetallzelle, wie die Anode, die Kathode, der Elektrolyt und/oder das Leitsalz, sowie elektrische Komponenten, wie elektrische Ableiter, elektrische Isolatoren und/oder Separatoren innerhalb der Alkalimetallzelle verstanden werden.

Dadurch, dass in dem Gehäusegrundkörper ein Temperiermittelkanal ausgebildet ist kann eine optimale Temperierung der darin aufgenommenen Alkalizellen gewährleistet und ein Wärmeaustausch sichergestellt werden. Insbesondere kann durch eine Integration eines Temperiermittelkanals in das Hartschalenbatteriegehäuse ein thermischer Kontakt zwischen den darin aufgenommenen Alkalizellen und dem Temperiermittel sicher gestellt werden, was bei herkömmlichen Batterien, bei denen mehrere einzelne Alkalizellen auf einer Kühlplatte angeordnet sind, problematisch sein kann. Bei derartigen herkömmlichen Batterien müssen die Zellen nämlich mit einem geringen Toleranzbereich eng verbaut werden, wobei während der Fertigung und des Betriebes einzelne Zellen den thermischen Kontakt zu der Kühlplatte, beispielsweise aufgrund von Fehlpositionierung, Dehnung, Bewegung und/oder Verschiebung der Zellen, verlieren können und Luftspalte zwischen den Zellen und der Kühlplatte entstehen können, welche zu hohen Verlusten der Temperierwirkung beziehungsweise der Heiz- und/oder Kühlwirkung führen können. Durch die Integration des Temperiermittelkanals in das Hartschalenbatteriegehäuse kann hingegen vorteilhafterweise ein Kontaktverlust, eine Überhitzung und damit ein Ausfall von Zellen vermieden und eine höhere Lebens- beziehungsweise Funktionszeit der Zelle erzielt werden. Zudem kann durch einen Stoffschluss von Bauteilen mit Gehäuse- und Temperierfunktion ein verbesserter Temperaturausgleich erzielt werden.

Dadurch, dass der Gehäusegrundkörper im Wesentlichen aus Kunststoff und nicht wie bei herkömmlichen Hartschalenbatteriegehäusen aus Metall ausgebildet ist, kann vorteilhafterweise das Gehäusegewicht sowie dessen Material- und Herstellungskosten deutlich verringert werden. Zudem kann vorteilhafterweise auf eine schwere, üblicherweise aus Metall ausgebildete Kühlplatte verzichtet werden und so das Gesamtgewicht weiter reduziert werden. Durch ein verringertes Gewicht kann wiederum vorteilhafterweise die spezifische gravimetrische Energie auf Zellebene deutlich verbessert werden, welche insbesondere beim Einsatz in mobilen Anwendungen von besonderem Interesse ist.

Darüber hinaus kann die Montage beschleunigt werden, da ein Einbau eines separaten Kühlsystems entfallen kann. Insgesamt kann so ferner vorteilhafterweise eine funktionellere Einheit mit einem integrierten Thermosystem und wenigen Anschlüssen, beispielsweise für Strom, Steuerung/Diagnose und Temperierung, bereitgestellt werden, bei deren Montage insbesondere Arbeitsschritte im Hochvoltbereich minimiert werden können.

Da die Materialmenge zur Ausbildung des Gehäusedeckels geringer als die Materialmenge zur Ausbildung des Gehäusegrundkörpers ist, wirkt sich das Materialgewicht des Gehäusedeckels weniger stark auf das Gesamtgewicht des Hartschalenbatteriegehäuses aus als das Materialgewicht des Gehäusegrundkörpers. Daher ist es grundsätzlich möglich den Gehäusedeckel aus Metall auszugestalten.

Im Rahmen einer Ausführungsform sind jedoch der Gehäusegrundkörper und der Gehäusedeckel zumindest im Wesentlichen aus Kunststoff ausgebildet.

Dadurch, dass der Gehäusegrundkörper und der Gehäusedeckel im Wesentlichen aus Kunststoff und nicht wie bei herkömmlichen Hartschalenbatteriegehäusen aus Metall ausgebildet sind, kann vorteilhafterweise das Gehäusegewicht sowie dessen Material- und Herstellungskosten weiter verringert werden und damit die spezifische gravimetrische Energie auf Zellebene weiter verbessert werden.

Zudem weist Kunststoff elektrisch isolierende Eigenschaften auf und ist im Gegensatz zu Metallen nicht elektrisch leitend. Dies bietet den Vorteil einer vereinfachten elektrischen Isolation und einer Vermeidung von im Hochvoltbereich ansonsten auftretenden Isolationsproblemen.

Dadurch, dass der Gehäusegrundkörper durch den Gehäusedeckel verschließbar ist, liegen darin aufgenommene Zellen sowie beispielsweise Verschaltungselemente zur elektrischen Verschaltung der Zellen untereinander zudem vorteilhafterweise nicht offen, werden nach Außen elektrisch isoliert und können durch das Hartschalenbatteriegehäuse gut gegen das Einwirken von äußeren mechanische Kräften geschützt werden. Zudem kann, da das Gehäuse im Wesentlichen aus Kunststoff ausgebildet ist, beispielsweise im Fall eines Unfalls, die Gefahr verringert werden, dass metallische Gehäusebruchstücke in die Zellen gelangen, welche gegebenenfalls zu einem internen Kurzschluss führen könnten. So kann insbesondere die Sicherheit erhöht werden. Dies ist insbesondere beim Einsatz in mobilen Anwendungen, beispielsweise in einem Fahrzeug, von Vorteil.

Zudem bietet eine Ausbildung des Gehäuses aus Kunststoff gegenüber einer Ausbildung des Gehäuses aus Metall den Vorteil einer freieren Formgebung des Gehäuses. So kann zum Beispiel eine bessere Anpassung des Gehäuses an die Form des Wickels erfolgen. Beispielsweise können im Innenraum des Gehäuses Rundung gestaltet werden, welche zum Beispiel die Zellkomponentenpackung, insbesondere Wickelpackung, einer ideal prismatischen Form angleicht. Weiterhin kann so eine bessere mechanische Halterung der Zellkomponenten im Gehäuse erzielt und so genannte Retainer zur Positionshaltung der Zellen eingespart werden. Darüber hinaus kann durch eine optimierte Gehäusegestaltung Leerraum und freier Flüssigelektrolyt im Zellinneren eingespart, thermische Übergänge verbessert, eine gleichmäßigere Temperaturverteilung erzielt und die Lebensdauer des galvanischen Elements verlängert werden. Weiterhin ermöglicht eine Ausbildung des Gehäuses aus Kunststoff eine Verringerung von Vibrationen, was sich wiederum vorteilhaft auf die Lebensdauer von elektrischen Kontakten, beispielsweise zwischen Terminals und/oder Kollektoren und zellverbindenden Ableiterelementen auswirkt.

Beispielsweise können die Alkalimetallzellen Lithiumzellen sein.

Unter einer Lithiumzelle kann insbesondere eine Alkalimetallzelle verstanden werden, welche als elektrochemisch aktives Material, beispielsweise Anodenmaterial, Lithium umfasst. Dabei kann unter einer Lithiumzelle sowohl eine Alkalimetallzelle mit einer metallischen lithiumhaltigen Anode, wie eine Lithiumsauerstoffzelle, als auch eine Alkalimetallzellen mit einer lithiuminterkalierenden Anode, wie eine Lithiumionenzelle, verstanden werden.

Insbesondere können die Alkalimetallzellen Lithiumionenzellen sein.

Lithiumionenzellen stellen eine spezielle Form von Lithiumzellen dar und weisen keine metallische Lithiumanode, sondern eine Anode aus einem so genannten Interkalationsmaterial, beispielsweise Graphit, auf, in welches Lithiumionen reversibel eingelagert (interkaliert) und wieder ausgelagert (deinterkaliert) werden können. Lithiumionenzellen unterscheiden sich weiterhin von Lithiumzellen mit metallischer Lithiumanode dadurch, dass Lithiumionenzellen in der Regel äußerst feuchtigkeitsempfindliche Leitsalze, beispielsweise Lithiumhexafluorophospat (LiPF₆), enthalten, welche unter Umständen in Gegenwart von Wasser bis hin zu Fluorwasserstoff (HF) hydrolysieren können.

Im Rahmen einer Ausführungsform weist der Gehäusegrundkörper eine doppelte Wand mit einem äußeren Wandabschnitt und einem inneren Wandabschnitt auf, insbesondere wobei der Temperiermittelkanal zwischen dem äußeren Wandabschnitt und dem inneren Wandabschnitt ausgebildet ist. Vorzugsweise ist dabei zumindest eine Wand des Gehäusegrundkörpers, welche an die Zellkomponenten von zwei oder mehr Alkalimetallzellen angrenzt, als eine derartige doppelte Wand ausgestaltet. Beispielsweise können eine Seitenwand und/oder mehrere Seitenwände und/oder der Boden des Gehäusegrundkörpers als doppelte Wände ausgestaltet sein.

Im Rahmen einer speziellen Ausführungsform weist der Gehäusegrundkörper einen doppelten Boden mit einem äußeren Bodenabschnitt und einem inneren Bodenabschnitt auf, insbesondere wobei der Temperiermittelkanal zwischen dem äußeren Bodenabschnitt und dem inneren Bodenabschnitt ausgebildet ist. Eine Ausbildung des Temperiermittelkanals in Form eines doppelten Bodens des Gehäusegrundkörpers hat den Vorteil, dass die Hydraulik einfacher ausgestaltet werden kann und weniger anfällig gegenüber Störungen, beispielsweise durch gegebenenfalls in dem Temperiermittel enthaltene Gasblasen, ist.

Im Rahmen einer weiteren Ausführungsform ist zwischen dem äußeren Wandabschnitt, insbesondere Bodenabschnitt, und dem inneren Wandabschnitt, insbesondere Bodenabschnitt, mindestens ein Zwischenwandabschnitt ausgebildet. Beispielsweise können zwischen dem äußeren Wandabschnitt, insbesondere Bodenabschnitt, und dem inneren Wandabschnitt, insbesondere Bodenabschnitt, mehrere Zwischenwandabschnitte ausgebildet sein. Der oder die Zwischenwandabschnitte können insbesondere dazu ausgelegt sein, die Strömungsrichtung des Temperiermittelkanals zu ändern beziehungsweise die Strömungsrichtung des Temperiermittelkanals kann um den oder die Zwischenwandabschnitte umlenkbar sein. So kann vorteilhafterweise eine gleichmäßigere Temperierung der Zellen erzielt werden.

Im Rahmen einer weiteren Ausführungsform ist der Temperiermittelkanal, insbesondere mittels eines oder mehrerer Zwischenwandabschnitte, mäanderförmig ausgebildet. So kann vorteilhafterweise eine besonders gleichmäßige Temperierung der Zellen erzielt werden.

Im Rahmen einer weiteren Ausführungsform weist der Gehäusegrundkörper einen, insbesondere von Außen zugänglichen, Zuleitungsanschluss (hydraulische Schnittstelle) zum Anschließen einer Temperiermittel zuführenden Leitung an den Temperiermittelkanal und einen, insbesondere von Außen zugänglichen, Ableitungsanschluss (hydraulische Schnittstelle) zum Anschließen einer Temperiermittel ableitenden Leitung an den Temperiermittelkanal auf. Der Zuleitungsanschluss und der Ableitungsanschluss können dabei auf der gleichen Seite des Gehäusegrundkörpers oder jeweils auf entgegengesetzten Seiten des Gehäusegrundkörpers oder jeweils auf zueinander benachbarten Seiten des Gehäusegrundkörpers ausgebildet sein. Der Zuleitungsanschluss und der Ableitungsanschluss können dabei sowohl zum Anschließen jeweils einer Temperiermittelzuleitung und einer Temperiermittelableitung an ein Hartschalenbatteriegehäuse als auch zum in Reihe und/oder parallel Schalten von Temperiermittelzuleitungen und Temperiermittelableitungen von zwei oder mehr (ähnlichen) Hartschalenbatteriegehäusen ausgebildet sein.

Es hat sich herausgestellt, dass die (Wasser-)Dampfdurchlässigkeit von Kunststoffen von der chemischen und physikalischen Beschaffenheit des Kunststoffes abhängt. Um auch bei einem ansonsten dampfdurchlässigen Kunststoff eine hohe Dampfdichtigkeit zu erzielen, insbesondere welche den Maßstäben für Alkalimetallzellen und insbesondere für Lithiumionenzellen entspricht, kann eine Dampfsperrschicht vorgesehen werden, welche ein Eindingen von Feuchtigkeit durch eine Permeation von Wasserdampf durch den ansonsten dampfdurchlässigen Kunststoff verhindert und so eine geeignete Feuchtigkeits- beziehungsweise Dampfdichtigkeit gewährleistet. Es hat sich gezeigt, dass derartige Dampfsperrschichten sogar so sperrend gegen Wassermoleküle sein können, wie herkömmlicherweise eingesetzte gewalzte Aluminiumfolie. Durch die Dampfsperrschicht kann so vorteilhafterweise ein Eindringen von Feuchtigkeit, insbesondere in Form von Wasserdampf, durch den Kunststoff in das Gehäuseinnere verhindert und beispielsweise im Fall von Lithiumionenzellen eine Hydrolyse des Leitsalzes vermieden werden.

Im Rahmen einer weiteren Ausführungsform umfasst daher der Gehäusegrundkörper beziehungsweise der Gehäusegrundkörper und der Gehäusedeckel mindestens eine Dampfsperrschicht.

Im Rahmen einer später im Zusammenhang mit dem erfindungsgemäßen galvanischen Element erläuterten, alternativen oder zusätzlichen Ausführungsform sind die Zellkomponenten der Alkalimetallzellen jeweils getrennt voneinander in einer mit einer Dampfsperrschicht ausgestatteten Kunststoffverpackungsfolie verpackt.

Durch eine Kombination dieser beiden Ausführungsformen, insbesondere durch mindestens eine im Hartschalenbatteriegehäuse vorgesehene Dampfsperrschicht und mindestens eine in der/den Kunststoffverpackungsfolie/n vorgesehene Dampfsperrschicht, können die Zellkomponenten der Alkalimetallzellen vorteilhafterweise besonders verlässlich vor einem Feuchtigkeitseintritt geschützt werden.

Unter einer Dampfsperrschicht kann insbesondere eine Schicht aus einem Material verstanden werden, welches einen hohen Wasserdampfdiffusionswiderstand aufweist. Vorzugsweise besitzt das Material der Dampfsperrschicht einen höheren Wasserdampfdiffusionswiderstand als der Kunststoff aus dem der Gehäusegrundkörper beziehungsweise der Gehäusedeckel ausgebildet ist. Der Wasserdampfdiffusionswiderstand des Materials der Dampfsperrschicht kann insbesondere deutlich höher, beispielsweise um einen Faktor ≥ 5, beispielsweise um einen Faktor ≥ 10 oder sogar um einen Faktor ≥ 50 oder ≥ 90 oder gegebenenfalls sogar um einen Faktor ≥ 1.000, größer sein als der Wasserdampfdiffusionswiderstand des der Kunststoffes aus dem der Gehäusegrundkörper beziehungsweise der Gehäusedeckel ausgebildet ist. Beispielsweise kann das Material der Dampfsperrschicht eine Wasserdampfdiffusionswiderstandszahl von ≥ 10.000, insbesondere von ≥ 100.000, beispielsweise von ≥ 500.000 oder von ≥ 900.000 oder sogar von um etwa 1.000.000, aufweisen.

Durch eine Ausstattung des Hartschalenbatteriegehäuses mit einer Dampfsperrschicht kann vorteilhafterweise ein Schutz vor Umwelteinflüssen, wie Salznebel, Kondenswasser, gewährleistet werden. Zudem kann durch eine Dampfsperrschicht gegebenenfalls ein Abdiffundieren von Elektrolytlösungsmittelmolekülen verhindert werden.

Durch die Kombination von Kunststoff und Dampfsperrschicht ist es daher vorteilhafterweise möglich ein Hartschalenbatteriegehäuse mit geringem Gewicht bereitzustellen, welches ähnlich oder sogar genauso mechanisch stabil und dampfsperrend sein kann wie herkömmliche metallische Hartschalenbatteriegehäuse und damit insbesondere für galvanische Elemente mit feuchtigkeitsempfindlichen Komponenten, wie Alkalimetallzellen, beispielsweise Lithiumzellen, geeignet ist und es ermöglicht bisherige metallische Gehäuse für galvanische Elemente zu ersetzen.

Unter einem zumindest im Wesentlichen aus Kunststoff ausgebildeten Gehäusegrundkörper beziehungsweise Gehäusedeckel kann insbesondere verstanden werden, dass das Materialvolumen des Gehäusegrundkörpers beziehungsweise Gehäusedeckels, welches durch Kunststoff eingenommen wird, insbesondere zumindest mehr als 75 Prozent des Gesamtmaterialvolumens des Gehäusegrundkörpers beziehungsweise Gehäusedeckels beträgt. Beispielsweise kann das Materialvolumen des Gehäusegrundkörpers beziehungsweise Gehäusedeckels, welches durch Kunststoff eingenommen wird, dabei ≥ 90 Prozent des Gesamtmaterialvolumens des Gehäusegrundkörpers beziehungsweise Gehäusedeckels betragen. Insbesondere können dabei zumindest die tragenden Abschnitte des Gehäusegrundkörpers beziehungsweise Gehäusedeckels aus Kunststoff ausgebildet sein. Daneben kann ein zumindest im Wesentlichen aus Kunststoff ausgebildeter Gehäusegrundkörper beziehungsweise Gehäusedeckel Abschnitte aus anderen Materialien aufweisen. Zum Beispiel kann der Gehäusegrundkörper beziehungsweise Gehäusedeckel Abschnitte aufweisen, welche eine nichtkunststoffbasierte Dampfsperrschicht und/oder metallische Elemente, wie elektrische Schnittstellen, so genannte (äußere) Terminals und/oder hydraulische Schnittstellen (Zuleitungsanschluss/Ableitungsanschluss) und/oder Schnittstellendurchführungen, umfassen. Bezogen auf das Gesamtmaterialvolumen des Gehäusegrundkörpers beziehungsweise Gehäusedeckels können die Abschnitte des Gehäusegrundkörpers beziehungsweise Gehäusedeckels, welche aus anderen Materialien als Kunststoff ausgebildet sind, beispielsweise in Summe ein Materialvolumen von < 75 %, beispielsweise von < 10 %, einnehmen.

Es ist möglich, dass der Gehäusegrundkörper beziehungsweise der Gehäusedeckel ausschließlich oder fast ausschließlich aus Kunststoff hergestellt sind. Im Fall des Einsatzes einer kunststoffbasierten Dampfsperrschicht, kann der Gehäusegrundkörper beziehungsweise der Gehäusedeckel beispielsweise ausschließlich aus Kunststoff ausgebildet sein. Da zum Erreichen eines dampfsperrenden Effektes nur wenig Material benötigt wird, kann im Fall des Einsatzes einer, beispielsweise metallischen Dampfsperrschicht, der Gehäusegrundkörper beziehungsweise der Gehäusedeckel beispielsweise immer noch als fast ausschließlich aus Kunststoff ausgebildet bezeichnet werden, auch wenn der Gehäusegrundkörper beziehungsweise der Gehäusedeckel eine geringe Menge an Metall oder Halbmetall umfasst.

Insbesondere kann der Innenraum des Gehäusegrundkörpers zur Aufnahme von mindestens zwei Zellwickeln, insbesondere Lithiumionenzellwickeln, ausgelegt sein.

Unter einem Zellwickel (englisch: "jelly roll") kann insbesondere eine spezielle, nämlich wickelförmige, Anordnung der Zellkomponenten einer Alkalimetallzelle verstanden werden. Ein Zellwickel kann zum Beispiel ein wickelförmiges Bauteil sein, welches neben den elektrochemisch aktiven Komponenten einer Alkalimetallzelle, elektrische Ableiterelemente, wie Ableiterfolien, sowie elektrische Isolationselemente, wie eine oder mehrere Isolationsfolien und/oder eine oder mehrere Separatorfolien, umfasst.

Die Dampfsperrschicht kann direkt auf das Material des Gehäusegrundkörpers oder des Gehäusegrundkörpers und des Gehäusedeckels aufgebracht sein. So kann vorteilhafterweise auf zusätzliche Schichten wie Haft- beziehungsweise Klebeschichten verzichtet und Gewicht, Kosten und Raumbedarf weiter reduziert werden.

Im Rahmen einer weiteren Ausführungsform ist die Dampfsperrschicht eine metallische, organische, polymere oder gläserne Schicht. Mit derartigen Schichten kann vorteilhafterweise ein dampfsperrender Effekt erzielt werden.

Die Dampfsperrschicht kann beispielsweise eine Schichtdicke von ≥ 1 µm bis ≤ 20 µm aufweisen.

Im Rahmen einer weiteren Ausführungsform ist die Dampfsperrschicht durch Aufdampfen, durch Sputtern, durch galvanisches Beschichten, durch Sprühen, durch Tauchen und/oder durch Walzplatieren, insbesondere durch Aufdampfen, durch Sputtern, durch galvanisches Beschichten und/oder durch Walzplatieren, aufgebracht. Diese Auftragtechniken haben sich zum Aufbringen der Dampfsperrschicht als vorteilhaft erwiesen. Dabei kann die Dampfsperrschicht in einem Verfahrensschritt auf den Gehäusegrundkörper und den Gehäusedeckel aufgebracht sein. Gegebenenfalls kann der Untergrund, insbesondere der Kunststoff des Gehäusegrundkörpers beziehungsweise des Gehäusedeckels vor dem Aufbringen der Dampfsperrschicht einer Plasma- und/oder Korona-Behandlung unterzogen werden. So kann vorteilhafterweise die Haftung der Dampfsperrschicht an dem Untergrund verbessert werden.

Die Dampfsperrschicht kann zum Beispiel eine metallische Schicht sein. Insbesondere kann die die Dampfsperrschicht Aluminium und/oder Chrom und/oder Silicium und/oder Eisen umfassen. Insbesondere kann die Dampfsperrschicht aus Aluminium und/oder Chrom und/oder Silicium und/oder Edelstahl ausgebildet sein. Eine metallische Dampfsperrschicht kann beispielsweise durch Aufdampfen, durch Sputtern oder durch galvanisches Beschichten aufgebracht sein.

Gegebenenfalls kann die metallische Dampfsperrschicht eine superhydrophobe, nanostrukturierte Schicht sein. Die superhydrophoben Eigenschaften können dabei insbesondere analog zum so genannten Lotuseffekt durch eine Strukturierung, insbesondere im Nanometerbereich, erzielt werden. Zum Beispiel kann die metallische Dampfsperrschicht mindestens ein nanostrukturiertes Halbmetall, insbesondere nanostrukturiertes Silicium, umfassen. Insbesondere kann die Dampfsperrschicht aus mindestens einem nanostrukturiertes Halbmetall, beispielsweise nanostrukturiertem Silicium, ausgebildet sein.

Insofern die Dampfsperrschicht eine metallische Schicht ist, ist es möglich auf zumindest einen Teil der Dampfsperrschicht, beispielsweise den an den Innenraum angrenzenden Teil eine Isolationsschicht aus einem elektrisch isolierenden Material aufzutragen. Eine elektrische Isolation kann jedoch auch durch andere Maßnahmen, beispielsweise durch das später erläuterte Verpacken von Zellkomponenten in Kunststoffverpackungsfolien erzielt werden.

Die Dampfsperrschicht kann jedoch ebenso eine organische Schicht sein. Insbesondere kann die Dampfsperrschicht Parylen umfassen oder daraus ausgebildet sein.

Insbesondere kann die Dampfsperrschicht eine polymere Schicht sein. Beispielsweise kann die Dampfsperrschicht Parylen und/oder mindestens ein nanostrukturiertes Polyolefin umfassen oder daraus ausgebildet sein.

Eine organische beziehungsweise polymere Dampfsperrschicht kann beispielsweise durch Sprühen oder Tauchen, insbesondere Sprühen, aufgebracht sein.

Insbesondere kann die organische beziehungsweise polymere Dampfsperrschicht eine superhydrophobe, nanostrukturierte Schicht sein. Die superhydrophoben Eigenschaften können dabei insbesondere analog zum so genannten Lotuseffekt durch eine Strukturierung, insbesondere im Nanometerbereich, erzielt werden, Zum Beispiel kann die Dampfsperrschicht mindestens ein nanostrukturiertes Polyolefin, insbesondere nanostrukturiertes Polypropylen (PP) und/oder Polyethylen (PE), umfassen. Insbesondere kann die Dampfsperrschicht aus mindestens einem nanostrukturierten Polyolefin, beispielsweise nanostrukturiertes Polypropylen (PP) und/oder Polyethylen (PE), ausgebildet sein.

Die Dampfsperrschicht kann jedoch ebenso eine gläserne Schicht sein. Beispielsweise kann die Dampfsperrschicht Siliciumdioxid umfassen.

Insbesondere kann die Dampfsperrschicht aus mindestens einem nanostrukturierten Polyolefin, beispielsweise nanostrukturiertes Polypropylen (PP) und/oder Polyethylen (PE), und/oder mindestens einem nanostrukturiertes Halbmetall, beispielsweise nanostrukturiertem Silicium, ausgebildet sein.

Diese superhydrophoben Materialen haben den Vorteil, dass sie - auch wenn sie im unmittelbaren Kontakt mit elektrochemisch aktiven Zellkomponenten, wie den organischen Carbonaten und/oder Lithium-Leitsalz, stehen - einen hohe chemische und elektrochemische Langzeitstabilität aufweisen können. Besonders gute Ergebnisse konnten vorteilhafterweise mit nanostrukturiertem Poylpropylen (PP) erzielt werden.

Im Rahmen einer weiteren Ausführungsform ist die Dampfsperrschicht in den Kunststoff des Gehäusegrundkörpers beziehungsweise des Gehäusegrundkörpers und des Gehäusedeckels integriert. Insbesondere kann dabei die Dampfsperrschicht derart in den Kunststoff des Gehäusegrundkörpers beziehungsweise des Gehäusedeckels integriert sein, dass die Dampfsperrschicht den Gehäuseinnenraum im geschlossenen Zustand des Gehäuses im Wesentlichen vollständig umgibt.

Im Rahmen einer weiteren Ausführungsform sind zumindest die im geschlossenen Zustand des Gehäuses innen liegenden und/oder den Innenraum begrenzenden Flächen des Gehäusegrundkörpers beziehungsweise des Gehäusegrundkörpers und des Gehäusedeckels, insbesondere im Wesentlichen vollständig, mit einer Dampfsperrschicht bedeckt. Die Applizierung einer innen liegenden Dampfsperrschicht weist zusätzlich zu den bereits erläuterten Vorteilen insbesondere bei einer später genauer erläuterten Ausführungsform des Hartschalenbatteriegehäuse, in welcher der Gehäusegrundkörperinnenraum durch Trennwände in Fächer unterteilt ist, den Vorteil auf, dass im Fall einer defekten Zelle eines Moduls die anderen Zellen dieses Moduls besser geschützt werden können.

Der Gehäusegrundkörper beziehungsweise der Gehäusegrundkörper und der Gehäusedeckel können zum Beispiel zumindest im Wesentlichen aus einem Kunststoff ausgebildet sein, welcher mindestens ein Polymer umfasst, welches ausgewählt ist aus der Gruppe bestehend aus Polyolefinen, Polyphenylensulfiden und Kombinationen davon. Beispielsweise können der Gehäusegrundkörper und der Gehäusedeckel aus Polypropylen (PP), Polyethylen (PE), Polypropylen-Polyethylen-Copolymer (PP/PE) oder Polyphenylensulfid (PPS) ausgebildet sein. Diese Kunststoffe weisen vorteilhafterweise eine ausreichende Temperaturbeständigkeit, eine gute Chemikalienbeständigkeit und eine gute mechanische Stabilität auf.

Der Gehäusegrundkörper beziehungsweise der Gehäusedeckel kann beispielsweise eine Wandstärke von > 100 µm aufweisen.

Der Gehäusegrundkörper beziehungsweise der Gehäusegrundkörper und der Gehäusedeckel können beispielsweise durch ein Tiefziehverfahren oder Spritzgussverfahren, insbesondere Spritzgussverfahren, insbesondere aus Kunststoff, hergestellt sein. Durch den Einsatz dieser Verfahren für Kunststoffe sind viele Formen realisierbar, welche es ermöglichen, Batterien optimaler, beispielsweise in Fahrzeugen, unterzubringen.

Im Rahmen einer weiteren Ausführungsform ist der Innenraum des Gehäusegrundkörpers durch eine oder mehrere darin ausgebildete Kunststofftrennwände in voneinander separierte Fächer unterteilt, wobei die Fächer jeweils zur Aufnahme der Zellkomponenten einer Alkalimetallzelle, insbesondere eines (Lithiumionen-)Zellwickels, ausgelegt sind.

Durch die Kunststofftrennwände können die Zellkomponenten von einer in einem Fach angeordneten Alkalimetallzellen gegenüber den Zellkomponenten von in benachbarten Fächern angeordneten Alkalimetallzellen vorteilhafterweise, insbesondere ohne einen weiteren Verfahrensschritt, elektrisch isoliert werden.

Da die elektrische Isolation durch die Kunststofftrennwände gewährleistet werden kann, können die Zellkomponenten beziehungsweise Zellwickel, insbesondere einzeln, ohne weiter Maßnahmen zur elektrischen Isolation und ohne dass es zu einem Kurzschluss der Zellen kommt in die unterschiedlichen Fächer eingebracht werden, was sich zudem vorteilhaft auf die Packungsdichte auswirken kann.

Zudem kann durch die Kunststofftrennwände die mechanische Stabilität des Hartschalenbatteriegehäuses weiter erhöht werden.

Darüber hinaus kann durch die Kunststofftrennwände ein definierter Druck auf die Zellkomponenten, insbesondere Zellwickel, aufgebracht werden, welcher vorteilhaft für eine ordnungsgemäße Funktion der Zellen sein kann.

Vorzugsweise sind auch die, die Fächer begrenzenden Flächen, insbesondere im Wesentlichen vollständig, mit einer Dampfsperrschicht bedeckt. Insofern es sich bei der Dampfsperrschicht um eine metallische Dampfsperrschicht handelt, kann zur elektrischen Isolation der in den Fächern aufzunehmenden Zellkomponenten die Dampfsperrschicht mit einer Isolationsschicht bedeckt sein.

Im Rahmen einer weiteren Ausführungsform weisen der Gehäusegrundkörper und der Gehäusedeckel Verbindungselemente auf, welche dazu ausgelegt sind beim Verschließen des Gehäuses eine Nut-Feder-Steckverbindung auszubilden. Insbesondere können die Verbindungselemente zum Ausbilden der Nut-Feder-Steckverbindung die Innenraumöffnung des Gehäusegrundkörpers, insbesondere vollumfänglich beziehungsweise lückenlos, umlaufen. So kann vorteilhafterweise ein luftdichtes Schließen des Hartschalenbatteriegehäuses und eine gute Dichtwirkung beim Verschließen des Gehäuses erzielt werden. Insbesondere kann auf den Stirnseiten der, die Öffnung des Gehäusegrundkörperinnenraums begrenzenden Wandungen des Gehäusegrundkörpers mindestens ein nutförmiges und/oder federförmiges Verbindungselement ausgebildet sein, insbesondere wobei der Gehäusedeckel dazu korrespondierendes Verbindungselemente zum Ausbilden einer Nut-Feder-Steckverbindung aufweist.

Um die Dichtwirkung im Rahmen dieser Ausführungsform weiter zu verbessern sind vorzugsweise auch die Verbindungselemente zum Ausbilden der Nut-Feder-Steckverbindung teilweise oder vollständig mit einer Dampfsperrschicht bedeckt beziehungsweise mit einer darin integrierten Dampfsperrschicht versehen. Insbesondere können beim Verschließen des Gehäuses beziehungsweise beim Ausbilden der Nut-Feder-Steckverbindung die Verbindungselemente bedeckende Dampfsperrschichten aneinander anlegbar, beispielsweise anpressbar, sein. So kann vorteilhafterweise ein Eintritt von Feuchtigkeit besonders effektiv verhindert werden und die Feuchtigkeits- beziehungsweise Dampfdichtigkeit weiter gesteigert werden.

Im Rahmen einer weiteren Ausführungsform sind daher die Verbindungselemente zum Ausbilden der Nut-Feder-Steckverbindung teilweise oder vollständig mit einer Dampfsperrschicht bedeckt beziehungsweise mit einer darin integriertem Dampfsperrschicht versehen. Insofern eine Isolationsschicht ohne dampfsperrende Eigenschaften vorgesehen ist, ist die Dampfsperrschicht vorzugsweise im Bereich der Verbindungselemente zum Ausbilden der Nut-Feder-Steckverbindung nicht mit der Isolationsschicht bedeckt.

Weiterhin können die Verbindungselemente dazu ausgelegt sein beim Verschließen des Gehäuses auch zwischen dem Gehäusedeckel und der oder den Kunststofftrennwände zum Unterteilen des Innenraums des Gehäusegrundkörpers in Fächer eine Nut-Feder-Steckverbindung auszubilden. So können vorteilhafterweise in den unterschiedlichen Fächern angeordnete Alkalimetallzellen besser voneinander separiert werden. Insbesondere kann auf den Stirnseiten der, den Gehäusegrundkörperinnenraum in Fächer unterteilenden Kunststofftrennwände des Gehäusegrundkörpers mindestens ein nutförmiges und/oder federförmiges Verbindungselement ausgebildet sein, insbesondere wobei der Gehäusedeckel dazu korrespondierende Verbindungselemente zum Ausbilden einer Nut-Feder-Steckverbindung aufweist.

Weiterhin kann das Hartschalenbatteriegehäuse mindestens zwei, insbesondere von Außen zugängliche, elektrische Schnittstellen (Terminals) aufweisen, über welche Alkalimetallzellen im Inneren des Gehäuses elektrisch kontaktiert werden können.

Hinsichtlich weiterer Ausführungsformen und Vorteile des erfindungsgemäßen Hartschalenbatteriegehäuses wird hiermit explizit auf die Erläuterungen im Zusammenhang mit dem erfindungsgemäßen galvanischen Element, dem erfindungsgemäßen Verfahren und den Figuren verwiesen.

Ein weiterer Gegenstand der vorliegenden Erfindung ist ein galvanisches Element, welches ein erfindungsgemäßes Hartschalenbatteriegehäuse umfasst. Insbesondere können dabei im Innenraum des Gehäusegrundkörpers des Hartschalenbatteriegehäuses die Zellkomponenten von mindestens zwei Alkalimetallzellen angeordnet sein. Beispielsweise können dabei im Innenraum des Gehäusegrundkörpers des Hartschalenbatteriegehäuses mindestens zwei (Lithiumionen-)Zellwickel angeordnet sein.

Bei dem galvanischen Element kann es sich insbesondere um eine Batterie beziehungsweise um ein sogenanntes Pack oder um ein sogenanntes Modul handeln.

Bei den Alkalimetallzellen kann es sich insbesondere um Lithiumzellen handeln. Insbesondere kann es sich bei den Alkalimetallzellen um Lithiumionenzellen handeln. Im Rahmen einer Ausgestaltung sind im Innenraum des Gehäusegrundkörpers mindestens zwei (Alkali-)Zellwickel angeordnet. Insbesondere können im Innenraum des Gehäusegrundkörpers mindestens zwei Lithiumionenzellwickel angeordnet sein.

Eine als Lithiumionenzelle ausgestaltete Alkalimetallzelle kann insbesondere eine Anode aus einem so genannten Interkalationsmaterial umfassen, in welches Lithiumionen reversibel interkalierbar und deinterkalierbar sind. Beispielsweise kann die Anode einer Lithiumionenzelle ein kohlenstoffbasiertes Interkalationsmaterial, wie Graphit, Graphen, Kohlenstoffnanoröhren, Hardcarbons, Softcarbons und/oder Silicium-Kohlenstoff-Blends umfassen. Als Kathodenmaterial kann eine Lithiumionenzelle beispielsweise Übergangsmetalloxide mit Schichtstruktur, wie Lithium-Kobalt-Oxid (LiCoO₂) und/oder Lihium-Nickel-Cobalt-Manganoxid (NCM), umfassen. Weiterhin kann eine Lithiumionenzelle insbesondere mindestens ein Leitsalz, beispielsweise Lithiumhexafluorophosphat (LiPF₆) und/oder Lithiumtetrafluoroborat (LiBF₄), und gegebenenfalls mindestens ein Lösungsmittel, beispielsweise Ethylencarbonat (EC) und/oder Dimethylcarbonat (DMC), umfassen. Zwischen der Anode und der Kathode kann eine Lithiumionenzelle insbesondere einen Separator umfassen. Zur elektrischen Kontaktierung der Anode und Kathode kann eine Lithiumionenzelle insbesondere elektrische Ableiterfolien umfassen. Die anodische Ableiterfolie kann beispielsweise aus Kupfer und die kathodische Ableiterfolie aus Aluminium ausgebildet sein.

Im Rahmen einer Ausführungsform ist der Innenraum des Gehäusegrundkörpers durch eine oder mehrere darin ausgebildete Kunststofftrennwände in voneinander separierte Fächer unterteilt. Dabei können die Zellkomponenten der Alkalimetallzellen, insbesondere die (Lithiumionen-)Zellwickel, insbesondere in unterschiedlichen Fächern angeordnet sein.

Im Rahmen einer anderen alternativen oder zusätzlichen Ausführungsform sind die Zellkomponenten der Alkalimetallzellen, insbesondere die Lithiumionenzellwickel, jeweils getrennt voneinander in Kunststoffverpackungsfolien verpackt, wobei die in Kunststoffverpackungsfolien verpackten Zellkomponenten, insbesondere (Lithiumionen-)Zellwickel, in dem Gehäusegrundkörper angeordnet sind.

Durch die Kunststoffverpackungsfolien können die Zellkomponenten, insbesondere Zellwickel, einer Alkalimetallzelle gegenüber den Zellkomponenten von benachbarten Alkalimetallzellen vorteilhafterweise, insbesondere ohne einen weiteren Verfahrensschritt, elektrisch isoliert werden. Da die elektrische Isolation durch die Kunststoffverpackungsfolien gewährleistet werden kann, können sich die Kunststoffverpackungsfolien von zwei oder mehr, jeweils getrennt voneinander verpackten Alkalimetallzellen berühren, ohne dass es zu einem Kurzschluss kommt. So kann wiederum vorteilhafterweise ein galvanisches Element mit hoher Packungsdichte bereitgestellt werden. Zudem kann durch die Kunststoffverpackungsfolien eine elektrische Isolation bezüglich einer benachbarten metallischen Dampfsperrschicht gewährleistet werden.

Zudem kann durch die Kunststoffverpackungsfolien ein definierter Druck auf die Zellkomponenten, insbesondere Zellwickel, aufgebracht werden, welcher vorteilhaft für eine ordnungsgemäße Funktion der Zellen sein kann.

Dadurch, das die in Kunststoffverpackungsfolien verpackten Zellkomponenten in dem durch den Gehäusedeckel verschließbaren Innenraum des Gehäusegrundkörpers des Hartschalenbatteriegehäuses angeordnet sind und die Zellen nicht in der herkömmlichen offenen Modulbauweise verbaut, kann vorteilhafterweise ein Schutz vor mechanischen Einwirkungen gewährleistet werden, welcher insbesondere beim Einsatz in mobilen Anwendungen, wie in Fahrzeugen, vorteilhaft ist.

Insgesamt kann durch diese Ausführungsform vorteilhafterweise auf ein metallische Gehäuse verzichtet und das Gewicht sowie die Material- und Herstellungskosten weiter minimiert werden.

Im Rahmen einer speziellen Ausgestaltung umfassen die Kunststoffverpackungsfolien mindestens ein polar modifiziertes, insbesondere gepfropftes, Polyolefin, beispielsweise Polypropylen, zum Beispiel Maleinsäure gepfropftes Polypropylen. Insbesondere können die Kunststoffverpackungsfolien aus mindestens einem polar modifizierten, insbesondere gepfropften, Polyolefin, beispielsweise Polypropylen, zum Beispiel Maleinsäure gepfropftem Polypropylen, ausgebildet sein.

Polar modifizierten Polyolefine können vorteilhafterweise eine äußerst hohe Haftung gegenüber Metallen aufweisen. So kann vorteilhafterweise eine gute Dichtwirkung zwischen Kunststoffverpackungsfolien und metallischen Ableiterelementen, beispielsweise Ableiterstiften, so genannten Kollektoren, zum Beispiel aus Kupfer, Aluminium oder Nickel, erzielt werden.

Die Zellkomponenten, insbesondere Zellwickel, der einzelnen Alkalimetallzellen können beispielsweise jeweils in Kunststoffverpackungsfolien eingeschweißt sein.

Die Kunststoffverpackungsfolien können vorteilhafterweise dünn ausgestaltet werden und zum Beispiel eine Folienstärke von ≥ 20 µm bis ≤ 100 µm aufweisen.

Im Rahmen einer Ausgestaltung sind die Kunststoffverpackungsfolien jeweils mit mindestens einer Dampfsperrschicht ausgestattet. Insbesondere kann es sich dabei um die im Zusammenhang mit dem erfindungsgemäßen Hartschalenbatteriegehäuse erläuterten Arten von Dampfsperrschichten handeln. Die Dampfsperrschicht kann in den Kunststoff der Verpackungsfolie integriert sein und/oder die Außenseite und/oder Innenseite der Verpackungsfolie bedecken. Insofern die Kunststoffverpackungsfolie eine metallische Dampfsperrschicht aufweist, kann diese durch eine oder mehr, beispielsweise innen liegende, Isolationsschichten beziehungsweise Kunststofffolienschichten der Verpackungsfolie von den Zellekomponenten oder anderen elektrisch leitenden Komponenten elektrisch isoliert werden.

Vorzugsweise erfolgt eine, beispielsweise serielle und/oder parallele, elektrische Verschaltung von zwei oder mehr Alkalimetallzellen, insbesondere zu einem Modul, im Innenraum des Hartschalenbatteriegehäuses. So können vorteilhafterweise die innen liegenden elektrischen Anschlüsse geschützt werden.

Eine elektrische Kontaktierung der im Innenraum verschalteten Zellen kann insbesondere über die mindestens zwei, insbesondere von Außen zugänglichen, elektrischen Schnittstellen (Terminals) erfolgen. Insgesamt kann so die Zahl der Anschlüsse auf wenige, beispielsweise für Strom, Steuerung/Diagnose und Temperierung reduziert werden, was das galvanische Element zu einer funktionelleren Einheit macht. Dies wirkt sich unter anderem auch vereinfachend auf die Montage aus, beispielsweise indem weniger Arbeitsschritte im Hochvoltbereich durchgeführt werden müssen. Durch eine Optimierung Anschlüssen kann zudem vorteilhafterweise die Dampfdichtigkeit des Hartschalenbatteriegehäuses weiter verbessert werden.

Hinsichtlich weiterer Ausführungsformen und Vorteile des erfindungsgemäßen galvanischen Elements wird hiermit explizit auf die Erläuterungen im Zusammenhang mit dem erfindungsgemäßen Hartschalenbatteriegehäuse, dem erfindungsgemäßen Verfahren und den Figuren verwiesen.

Ein weiterer Gegenstand der vorliegenden Erfindung ist ein Verfahren zur Herstellung eines, insbesondere erfindungsgemäßen, galvanischen Elements, welches die folgenden Verfahrensschritte umfasst:
a) Ausbilden/Bereitstellen eines Gehäusegrundkörpers aus Kunststoff derart, dass der Gehäusegrundkörper einen Innenraum zur Aufnahme der Zellkomponenten von mindestens zwei Alkalimetallzelle sowie einen in den Gehäusegrundkörper integrierten Temperiermittelkanal aufweist, und gegebenenfalls Ausbilden/Bereitstellen eines Gehäusedeckels zum Verschließen des Innenraums des Gehäusegrundkörpers aus Kunststoff,
b) Einbringen der Zellkomponenten von mindestens zwei Alkalimetallzellen, insbesondere mindestens eines (Lithiumionen-)Zellwickels, in den Innenraum des Gehäusegrundkörpers, und
c) Verschließen, insbesondere luftdichtes Verschließen, des Innenraums des Gehäusegrundkörpers mit dem Gehäusedeckel.

Dabei kann in Verfahrensschritt a) und/oder in einem nach Verfahrensschritt c) erfolgenden Verfahrensschritt d) der Kunststoff des Gehäusegrundkörpers oder der Kunststoff des Gehäusegrundkörpers und des Gehäusedeckels, beispielsweise durch eine im Rahmen des erfindungsgemäßen Hartschalenbatteriegehäuses genannte Auftragtechnik, mit mindestens einer Dampfsperrschicht versehen beziehungsweise beschichtet werden.

Alternativ oder zusätzlich kann in Verfahrensschritt a) mindestens eine Dampfsperrschicht in den Kunststoff des Gehäusegrundkörpers oder in den Kunststoff des Gehäusegrundkörpers und des Gehäusedeckels integriert werden.

Alternativ oder zusätzlich können in Verfahrensschritt b) die Zellkomponenten der Alkalimetallzellen jeweils getrennt voneinander in Kunststoffverpackungsfolien verpackt in den Innenraum des Gehäusegrundkörpers eingebracht werden, wobei die Kunststoffverpackungsfolien jeweils mit mindestens einer Dampfsperrschicht ausgestattet sind.

Zwischen den Verfahrensschritten c) und d) kann das Verfahren weiterhin den Verfahrensschritt c1) stoffschlüssiges Verbinden, insbesondere durch Schweißen, beispielsweise Plasmaschweißen, des Gehäusedeckels mit dem Gehäusegrundkörper. Insbesondere kann dabei eine durchgängiger, insbesondere lückenloser und/oder umlaufender, stoffschlüssiger Verbindungsbereich, beispielsweise in Form einer umlaufenden Schweißnaht, geschaffen werden. So kann vorteilhafterweise die Dampfdichtigkeit weiter verbessert werden. Bei einem nachfolgenden Verfahrensschritt d) kann der stoffschlüssige Verbindungsbereich vorteilhafterweise ebenfalls mit der mindestens einen Dampfsperrschicht beschichtet werden.

Um die Haftung einer Dampfsperrschicht auf dem Kunststoff des Gehäusegrundkörpers und Gehäusedeckels zu verbessern, kann es vorteilhaft sein die Kunststoffoberfläche des Gehäusegrundkörpers und Gehäusedeckels vor dem Aufbringen der Dampfsperrschicht einer Plasma- und/oder Korona-Behandlung zu unterziehen.

Im Rahmen einer Ausgestaltung wird in Verfahrensschritt a) der Innenraum des Gehäusegrundkörpers durch Ausbilden von einer oder mehreren Kunststofftrennwände in voneinander separierte Fächer unterteilt. Dabei können in Verfahrensschritt b) die Zellkomponenten von zwei oder mehr Alkalimetallzellen, insbesondere zwei oder mehr (Lithiumionen-)Zellwickel, in unterschiedlichen Fächern eingebracht werden.

Im Rahmen einer anderen alternativen oder zusätzlichen Ausgestaltung werden in Verfahrensschritt b) zwei oder mehr Alkalimetallzellen in den Innenraum des Gehäusegrundkörpers eingebracht, deren Zellkomponenten, insbesondere Zellwickel, jeweils getrennt voneinander in Kunststoffverpackungsfolien verpackt sind.

Im Rahmen einer Ausgestaltung hiervon erfolgt das Verpacken der Zellkomponenten einer Alkalimetallzelle, insbesondere eines Zellwickels, dadurch, dass die Zellkomponenten einer Alkalimetallzelle, insbesondere ein Zellwickel, von einer Kunststoffverpackungsfolie ummantelt werden und deren Öffnungen anschließend, beispielsweise durch Schweißen, verschlossen werden. Insbesondere können die Zellkomponenten einer Alkalimetallzelle, insbesondere ein Zellwickel, in eine taschenförmig ausgestaltete Kunststoffverpackungsfolie eingebracht werden, deren Öffnung anschließend, beispielsweise durch Schweißen, verschlossen wird. Wie bereits erläutert können dabei die Kunststoffverpackungsfolien jeweils mit mindestens einer Dampfsperrschicht ausgestattet sein.

Zur elektrischen Kontaktierung der Zellkomponenten einer Alkalimetallzelle kann die Alkalimetallzelle insbesondere elektrische Ableiterelemente umfassen. Diese können beispielsweise in Form von Ableiterfolien, Ableiterstiften (Kollektoren), Ableiterkabeln und Ableiterblechen ausgebildet sein.

Bei einem Zellwickel können beispielsweise in die Wicklung integrierte elektrische Ableiterfolien dadurch elektrisch kontaktiert werden, dass zwei elektrische Ableiterstifte (Kollektoren) an Positionen in den Zellwickel eingesteckt werden, an denen diese jeweils eine der Ableiterfolien (kathodische beziehungsweise anodische Ableiterfolie) elektrisch kontaktieren. Die Ableiterstifte (Kollektoren) können insbesondere jeweils aus dem gleichen Material ausgebildet sein, wie die damit zu kontaktierende Ableiterfolie. Zum Beispiel kann eine kathodische Ableiterfolie aus Aluminium mit einem Ableiterstift (Kollektoren) aus Aluminium und eine anodische Ableiterfolie aus Kupfer mit einem Ableiterstift (Kollektoren) aus Kupfer elektrisch kontaktiert werden. Die Einsteckrichtung der Ableiterstifte (Kollektoren) kann dabei beispielsweise parallel zur Wicklungsachse sein.

Das Einstecken der Ableiterstifte (Kollektoren) kann grundsätzlich sowohl vor als auch nach dem Verpacken der Zellkomponenten einer Alkalimetallzelle, insbesondere eines Zellwickels, in einer Kunststoffverpackungsfolie erfolgen.

Ein weiterer Gegenstand der vorliegenden Erfindung ist ein nach einem erfindungsgemäßen Verfahren hergestelltes galvanisches Element.

Ein weiterer Gegenstand der vorliegenden Erfindung ist ein mobiles oder stationäres System, welches mindestens ein erfindungsgemäßes galvanisches Element umfasst. Beispielsweise kann es sich bei dem mobilen oder stationären System um ein Fahrzeug, wie ein Hybrid-Elektrofahrzeug (HEV), ein Plug-in-Hydrid-Elektrofahrzeug (PHEV), ein Elektrofahrzeug (EV) oder ein Mikrohybrid-Fahrzeug, ein Energiespeichersystem, zum Beispiel für ein Gebäude oder eine Anlage oder ein Gerät zur Telekommunikation und/oder Datenverarbeitung, wie ein Mobiltelefon, ein MP3-Player, oder ein Werkzeug, handeln.

Hinsichtlich weiterer Ausführungsformen und Vorteile des erfindungsgemäßen Verfahrens, des damit hergestellten galvanischen Elements und des erfindungsgemäßen mobilen oder stationären Systems wird hiermit explizit auf die Erläuterungen im Zusammenhang mit dem erfindungsgemäßen Hartschalenbatteriegehäuse, dem erfindungsgemäßen galvanischen Element, dem erfindungsgemäßen Verfahren und den Figuren verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische, angeschnittene perspektivische Ansicht einer Ausführungsform eines Gehäusegrundkörpers mit einem Temperiermittelkanal und mit einem Innenraum zur Aufnahme der Zellkomponenten von vier Alkalimetallzellen;
- Fig. 2: eine schematische, angeschnittene perspektivische Ansicht einer anderen Ausführungsform eines Gehäusegrundkörpers mit einem Temperiermittelkanal und mit einem Innenraum, welcher durch Trennwände in Fächer unterteilt ist, wobei die Fächer jeweils zur Aufnahme der Zellkomponenten einer Alkalimetallzelle ausgelegt sind;
- Fig. 3a-c: schematische Querschnitte durch unterschiedliche Ausführungsformen eines Gehäusegrundkörpers zur Veranschaulichung von unterschiedlichen Temperiermittelkanaldurchflusskonzepten;
- Fig. 4a-e: schematische Ansichten zur Veranschaulichung einer Ausführungsform eines erfindungsgemäßen Verfahrens; und
- Fig. 5: einen schematischen Querschnitt durch eine Ausführungsform des erfindungsgemäßen Hartschalenbatteriegehäuses, in welche der Gehäusegrundkörper und der Gehäusedeckel mit Verbindungselementen zur Ausbildung einer Nut-Feder-Steckverbindung zum luftdichten Verschließen des Gehäuses ausgestattet sind.

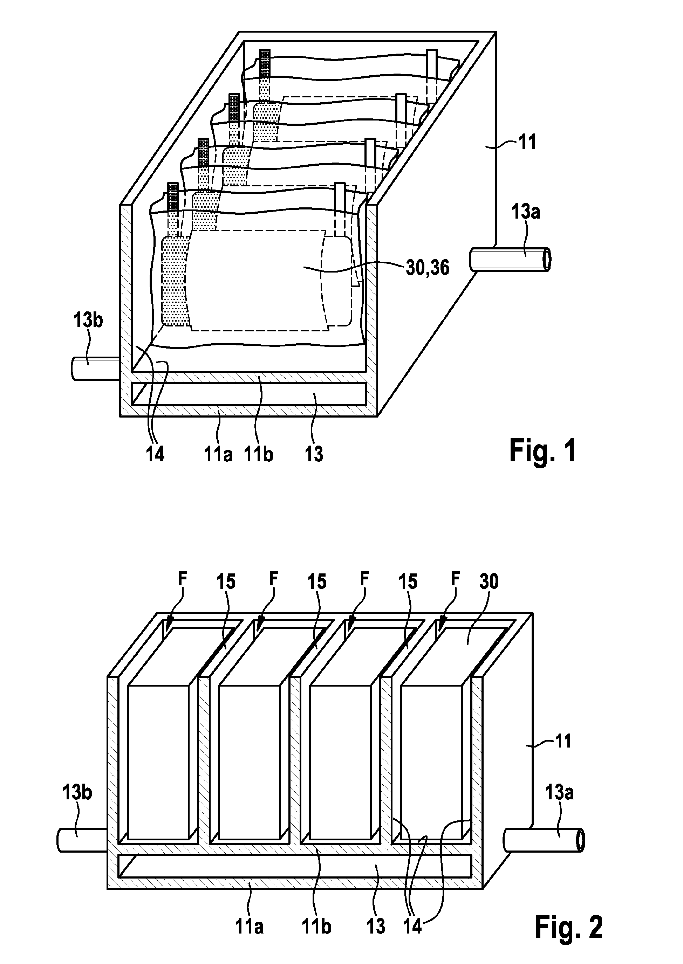

Figur 1 zeigt einen Gehäusegrundkörper 11 einer Ausführungsform eines erfindungsgemäßen Hartschalenbatteriegehäuses, welcher zumindest im Wesentlichen aus Kunststoff ausgebildet ist. Figur 1 zeigt, dass der Gehäusegrundkörper 11 einen Innenraum aufweist, welcher zur Aufnahme der Zellkomponenten 30 von vier Alkalimetallzellen, beispielsweise Lithiumzellen, ausgelegt ist. Darüber hinaus weist das Hartschalenbatteriegehäuse einen Gehäusedeckel auf zum Verschließen des Innenraums des Gehäusegrundkörpers 11 auf, welcher in Figur 1 jedoch nicht dargestellt ist.

Figur 1 zeigt, dass in dem Gehäusegrundkörper 11 ein Temperiermittelkanal 13 ausgebildet ist. Der Temperiermittelkanal 13 kann dabei als eine Art Rohrsystem dienen, durch welches ein Temperiermittel, so genannte Thermoflüssigkeit, zur Temperierung der in dem Hartschalengehäuse aufgenommenen Alkalimetallzellen geleitet werden kann. Als Temperiermittel kann zum Beispiel Wasser oder Glysantin eingesetzt werden. In der gezeigten Ausführungsform ist der Temperiermittelkanal 13 durch eine doppelte Wand, insbesondere einen doppelten Boden, 11a, 11 b realisiert. Figur 1 veranschaulicht, dass der doppelte Boden 11a,11b des Gehäusegrundkörpers 11 einen äußeren Bodenabschnitt 11a und einen inneren Bodenabschnitt 11 b aufweist, wobei der Temperiermittelkanal 13 zwischen dem äußeren Bodenabschnitt 11a und dem inneren Bodenabschnitt 11 b ausgebildet ist. Der Temperiermittelkanal 13 wird dabei insbesondere durch einen Hohlraum zwischen dem äußeren 11a und inneren 11b Bodenabschnitt ausgebildet. Durch diesen Hohlraum 13 unterhalb der Zellen 30 kann Temperiermittel beziehungsweise Kühlmittel geleitet werden.

Figur 1 zeigt weiterhin, dass der Gehäusegrundkörper 11 einen Zuleitungsanschluss 13a zum Anschließen einer Temperiermittel zuführenden Leitung an den Temperiermittelkanal 13 und einen Ableitungsanschluss 13b zum Anschließen einer Temperiermittel ableitenden Leitung an den Temperiermittelkanal 13 aufweist.

Figur 1 illustriert weiterhin, dass die Zellkomponenten 30 der Alkalimetallzellen, insbesondere Lithiumzellen, jeweils getrennt voneinander in Kunststoffverpackungsfolien 36 verpackt sind. Durch die Kunststoffverpackungsfolien 36 können die Zellkomponenten 30 der unterschiedlichen Alkalimetallzellen voneinander elektrisch isoliert werden. Als Material für die Kunststofffolientasche 36 ist insbesondere Maleinsäure gepfropftes Polypropylen geeignet, da dieses gut an den metallischen Ableiterstiften (Kollektoren) haftet und somit eine gute Dichtwirkung erzielt werden kann.

Die in Figur 2 gezeigte Ausführungsform eines Gehäusegrundkörpers 11 unterscheidet sich im Wesentlichen dadurch von der in Figur 1 gezeigten Ausführungsform eines Gehäusegrundkörpers 11, dass der Innenraum des in Figur 2 gezeigte Gehäusegrundkörpers 11 durch Trennwände 15 in voneinander separierte Fächer F unterteilt ist, welche jeweils die Zellkomponenten 30 einer Alkalimetallzelle, beispielsweise in Form eines Zellwickels, aufnehmen. Im Rahmen dieser Ausführungsform können die Zellkomponenten 30 der unterschiedlichen Alkalimetallzellen durch die Trennwände 15 voneinander elektrisch isoliert werden, weswegen es im Rahmen dieser Ausführungsform möglich ist auf eine Verpackung der Zellkomponenten 30 der einzelnen Alkalimetallzellen in Kunststoffverpackungsfolien zu verzichten. Es ist jedoch ebenso möglich die beiden Ausführungsformen miteinander zu kombinieren und auch in der in Figur 2 gezeigten Ausführungsform in Kunststoffverpackungsfolien verpackte Zellkomponenten 30 einzusetzen.

Die Bezugszeichen 14 kennzeichnen in den Figuren 1 und 2, dass im Rahmen der darin gezeigten Ausführungsformen eine Dampfschicht 14 die im geschlossenen Zustand des Gehäuses innen liegenden, den Innenraum begrenzenden Flächen des Gehäusegrundkörpers 11 bedeckt beziehungsweise derart in den Kunststoff des Gehäusegrundkörpers 11 integriert ist, dass diese den Gehäuseinnenraum im geschlossenen Zustand des Gehäuses im Wesentlichen vollständig umgibt.

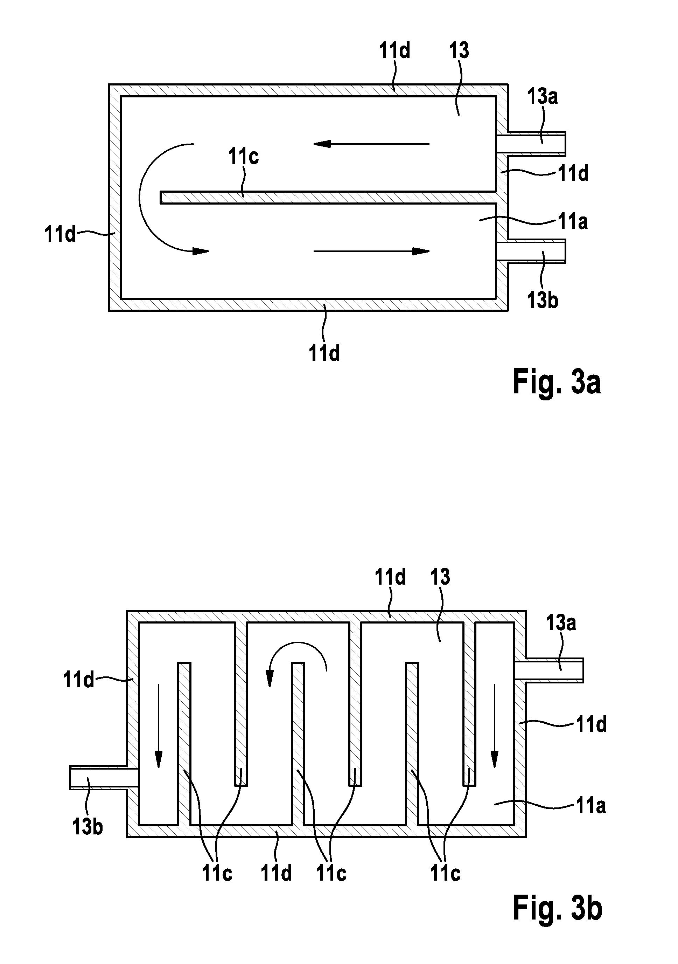

Die Figuren 3a bis 3c zeigen schematische Querschnitte durch unterschiedliche Ausführungsformen eines Gehäusegrundkörpers 11 und dienen der Veranschaulichung von unterschiedlichen Durchflusskonzepten des Temperiermittelkanals 13. Dabei zeigen die Figuren 3a bis 3c Querschnitte durch die doppelte Wand beziehungsweise den doppelten Boden, welche parallel zwischen dem äußeren 11a und dem inneren 11b Wandabschnitt beziehungsweise Bodenabschnitt der doppelten Wand beziehungsweise des doppelten Bodens liegen.

Die Figuren 3a bis 3c veranschaulichen, dass zwischen dem äußeren Wandabschnitt beziehungsweise Bodenabschnitt 11a und dem inneren Wandabschnitt beziehungsweise Bodenabschnitt (11 b, in Querschnittsansichten nicht dargestellt) jeweils mindestens ein Zwischenwandabschnitt 11c ausgebildet ist, welcher dazu ausgelegt ist, die Strömungsrichtung des Temperiermittelkanals 13 zu ändern.

In der in Figur 3a gezeigten Ausführungsform sind der Zuleitungsanschluss 13a und der Ableitungsanschluss 13b auf der gleichen Seite des Gehäusegrundkörpers 11 ausgebildet. Dabei ist ein Zwischenwandabschnitt 11c ausgebildet, um welchen die Strömungsrichtung des Temperiermittelkanals 13 von einem ersten, sich vom Zuleitungsanschluss 13a weg erstreckenden Strömungsrichtungsabschnitt in einen dazu gegenläufigen, sich in Richtung des Ableitungsanschlusses 13b erstreckenden Strömungsrichtungsabschnitt, beispielsweise einfach, umlenkt wird.

In der in Figur 3b gezeigten Ausführungsform sind der Zuleitungsanschluss 13a und der Ableitungsanschluss 13b auf gegenüberliegenden Seite des Gehäusegrundkörpers 11 ausgebildet. Dabei sind sechs Zwischenwandabschnitte 11c ausgebildet, um welche die Strömungsrichtung des Temperiermittelkanals 13 mäanderförmig insgesamt sechs Mal von einem, sich vom Zuleitungsanschluss 13a weg erstreckenden Strömungsrichtungsabschnitt in einen sich dazu gegenläufig, erstreckenden Strömungsrichtungsabschnitt umlenkt wird, wobei der Temperiermittelkanal 13 im letzten Strömungsrichtungsabschnitt in den Ableitungsanschluss 13b mündet.

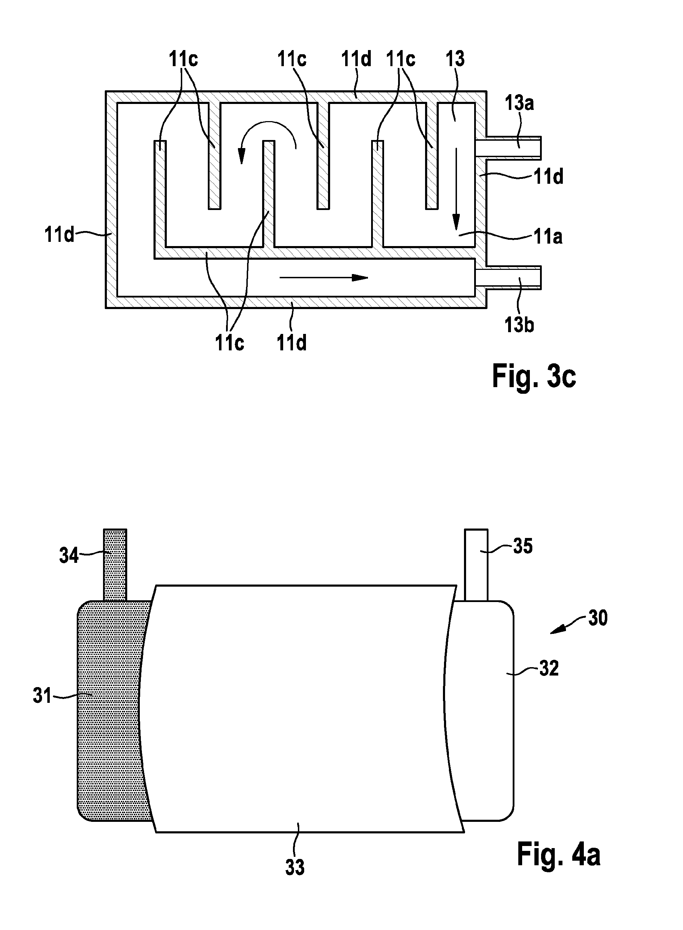

In der in Figur 3c gezeigten Ausführungsform sind der Zuleitungsanschluss 13a und der Ableitungsanschluss 13b auf der gleichen Seite des Gehäusegrundkörpers 11 ausgebildet. Dabei sind sieben Zwischenwandabschnitte 11 c derart ausgebildet, dass die Strömungsrichtung des Temperiermittelkanals 13 mäanderförmig zunächst sechs Mal von einem, sich vom Zuleitungsanschluss 13a weg erstreckenden Strömungsrichtungsabschnitt in einen sich dazu gegenläufig, erstreckenden Strömungsrichtungsabschnitt umlenkt wird und schließlich ein weiteres Mal in einen weiteren, Strömungsrichtungsabschnitt umgelenkt wird, in welchem der Temperiermittelkanal 13 an den sechs vorherigen Strömungsabschnitten vorbei in Richtung auf den Ableitungsanschluss 13b geführt wird.

Die Figuren 3a bis 3c illustrieren weiterhin, dass zwischen dem äußeren Wandabschnitt beziehungsweise Bodenabschnitt 11a und dem inneren Wandabschnitt beziehungsweise Bodenabschnitt (11 b, in Querschnittsansichten nicht dargestellt) Seitenwandabschnitte 11d ausgebildet sind, welche den Temperiermittelkanal 13 seitlich begrenzen.

Die Figuren 4a bis 4e veranschaulichen eine Ausführungsform eines erfindungsgemäßen Verfahrens, welches zur Herstellung eines in Figur 1 gezeigten Hartschalenmodulgehäuses beziehungsweise Moduls ausgelegt ist.

Figur 4a zeigt, dass ein Zellwickel 30, beispielsweise ein Lithiumionenzellwickel, bereitgestellt wird, welcher eine zur unteren Seitenkante senkrechte Umwicklungsachse aufweist und derart gewickelt ist, dass sowohl die anodische Ableiterfolie 31 aus Kupfer als auch die kathodische Ableiterfolie 32 aus Aluminium von Außen zugänglich ist. Der Zellwickel 30 wird durch eine Folie 33 aus einem elektrisch isolierenden Material zusammengehalten. Zur elektrischen Kontaktierung der anodischen 31 und kathodischen 32 Ableiterfolie sind Ableitungselemente 34, 35 in Form von Ableiterstiften (Kollektoren) in den Zellwickel derart eingesteckt, dass ein Ableiterstift (Kollektor) 34 die anodische Ableiterfolie 31 und der andere Ableiterstift (Kollektor) 35 die kathodische Ableiterfolie 32 elektrisch kontaktiert.

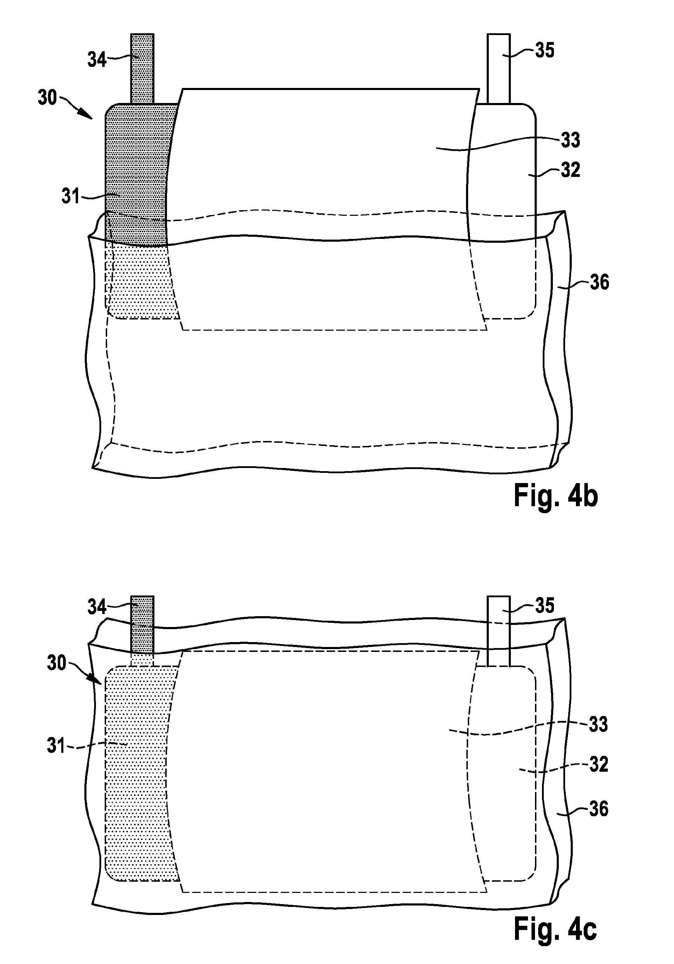

Figur 4b veranschaulicht, dass die in Figur 4a gezeigte Anordnung in eine taschenförmig ausgestaltete Kunststoffverpackungsfolie 36 eingebracht wird.

Figur 4c illustriert, dass nach dem Einbringen der in Figur 4a gezeigten Anordnung in die taschenförmig ausgestaltete Kunststoffverpackungsfolie 36 die Ableiterstifte (Kollektoren) 34, 35 teilweise aus der Kunststofffolientasche 36 herausragen. Die Öffnung der Kunststofffolientasche 36 kann anschließen beispielsweise verschweißt werden. Grundsätzlich ist es jedoch ebenso möglich zunächst den Zellwickel 30 in die Kunststofffolientasche 36 einzubringen und diese zu verschließen und danach erst die Ableiterstifte (Kollektoren) 34, 35 in den Zellwickel 30 einzustecken. Hierfür ist es insbesondere vorteilhaft, wenn die Kunststofffolientasche 36 aus einem durchsichtigen Material ausgebildet ist. Als Material für die Kunststofffolientasche 36 ist insbesondere Maleinsäure gepfropftes Polypropylen geeignet, da diese gut an den metallischen Ableiterstiften (Kollektoren) 34, 35 haftet und somit eine gute Dichtwirkung erzielt werden kann.

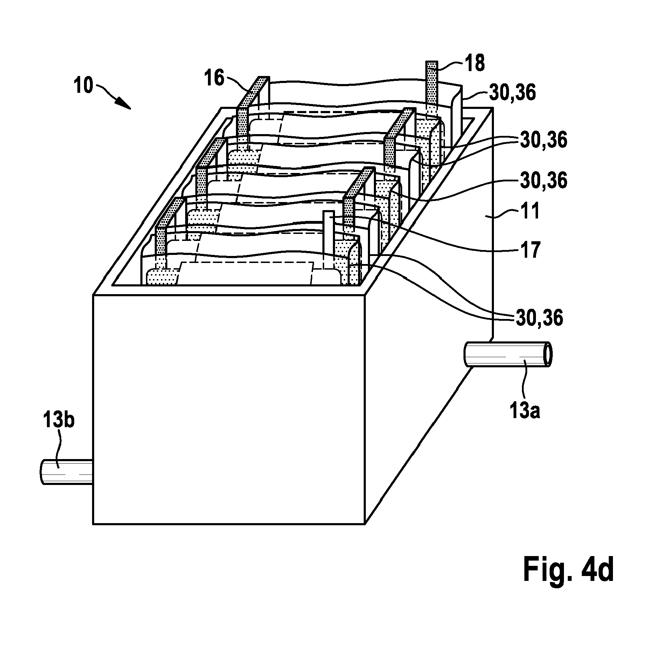

Figur 4d veranschaulicht, dass sechs derartig in Kunststoffverpackungsfolien 36 verpackte Zellwickel 30 in den Innenraum eines Gehäusegrundkörpers 11 eingebracht wurden, in welchem ein Temperiermittelkanal (nicht dargestellt) ausgebildet ist. Die Zellwickel 30 wurden durch elektrische Verschaltungselemente 16 seriell miteinander sowie mit elektrischen Schnittstellen (Terminals) 17,18 verschaltet.

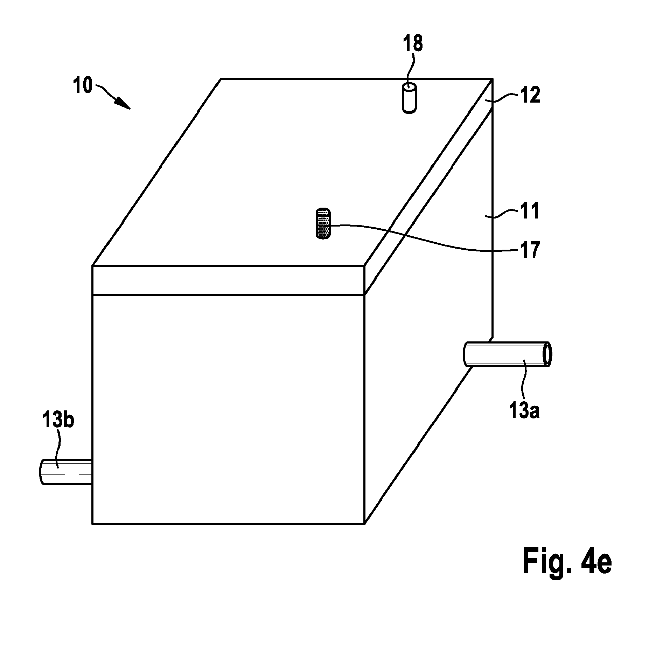

Figur 4e zeigen, dass der Innenraum des Gehäusegrundkörpers 11 mit einem Gehäusedeckel 12 derart verschlossen wurde, dass die elektrischen Schnittstellen (Terminals) 17,18 von Außen zugänglich sind, die Ableiterstifte (Kollektoren) 34, 35 sowie deren elektrische Verschaltung 16 hingegen im Gehäuseinnenraum geschützt angeordnet sind.

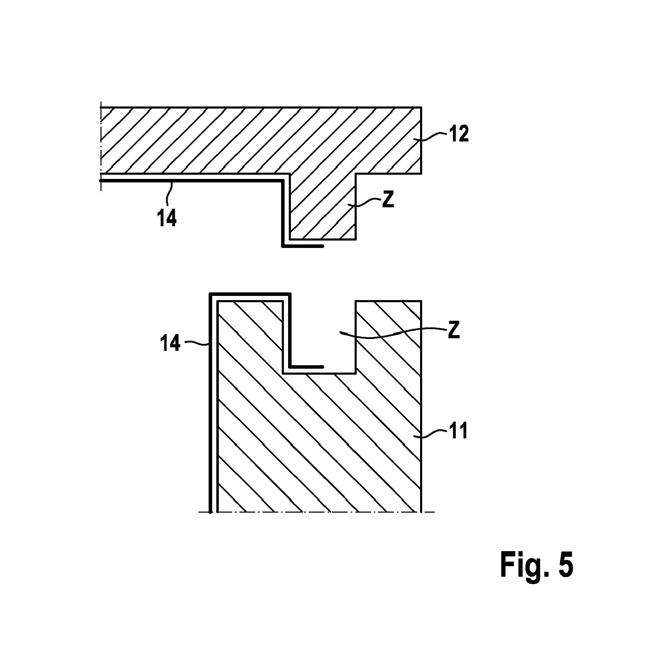

Bei einer, beispielsweise in Figur 5 gezeigten, verzahnten Ausgestaltung des Gehäusegrundkörpers 11 und des Gehäusedeckels 12 kann der Innenraum des Gehäusegrundkörpers 11 bereits durch Zusammenfügen der beiden Gehäusebauteile 11,12 luftdicht verschlossen werden. Es ist jedoch ebenso möglich den Gehäusegrundkörper 11 und den Gehäusedeckel 12 miteinander zu verschweißen, beispielsweise durch Plasmaschweißen, oder zu verkleben.

Die Zellkomponenten 30 im Innenraum des Gehäusegrundkörpers 11 können durch eine Dampfsperrschicht 14 vor Feuchtigkeit geschützt werden. Die Dampfsperrschicht 14 kann dabei beispielsweise in die Kunststoffverpackungsfolien 36 integriert und/oder darauf aufgebracht sein und/oder derart in den Kunststoff des Gehäusegrundkörpers 11 und gegebenenfalls des Gehäusedeckels 12 integriert und/oder darauf aufgebracht sein, dass die Dampfsperrschicht 14 den Gehäuseinnenraum im geschlossenen Zustand des Gehäuses im Wesentlichen vollständig umgibt. Um die Zellkomponenten 30 der Alkalimetallzellen vor gegebenenfalls in dem Temperiermittel enthaltener Feuchtigkeit zu schützen, kann die Dampfsperrschicht 14 insbesondere zwischen dem Temperiermittelkanal und dem Innenraum, beispielsweise in und/oder auf dem inneren Wandabschnitt beziehungsweise Bodenabschnitt 11 b ausgebildet sein.

Figur 5 zeigt eine Ausführungsform eines Hartschalenmodulgehäuses, in welcher der Gehäusegrundkörper 11 und der Gehäusedeckel 12 mit Verbindungselementen Z zur Ausbildung einer Nut-Feder-Steckverbindung zum luftdichten Verschließen des Gehäuses ausgestattet sind. Dabei umlaufen die Verbindungselemente Z vorzugsweise die Innenraumöffnung des Gehäusegrundkörpers 11. Die Verbindungselemente Z sind dabei zumindest teilweise derart mit einer Dampfsperrschicht 14 bedeckt, dass beim Ausbilden der Steckverbindung die Dampfsperrschichten 14 der Verbindungselemente Z des Gehäusegrundkörpers 11 und des Gehäusedeckels 12 aneinander anliegen. So kann vorteilhafterweise eine besonders gute Dichtwirkung erzielt werden.

## Patentansprüche

1. Hartschalenbatteriegehäuse für ein mindestens zwei Alkalimetallzellen, insbesondere Lithiumzellen, umfassendes galvanisches Element (10), umfassend
- einen Gehäusegrundkörper (11) mit einem Innenraum zur Aufnahme der Zellkomponenten (30) von mindestens zwei Alkalimetallzellen, und
- einen Gehäusedeckel (12) zum Verschließen des Innenraums des Gehäusegrundkörpers (11),
wobei der Gehäusegrundkörper (11) zumindest im Wesentlichen aus Kunststoff ausgebildet ist,
wobei in dem Gehäusegrundkörper (11) ein Temperiermittelkanal (13) ausgebildet ist.

2. Hartschalenbatteriegehäuse nach Anspruch 1, wobei der Gehäusegrundkörper (11) eine doppelte Wand (11a,11b) mit einem äußeren Wandabschnitt (11a) und einem inneren Wandabschnitt (11 b) aufweist, wobei der Temperiermittelkanal (13) zwischen dem äußeren Wandabschnitt (11a) und dem inneren Wandabschnitt (11 b) ausgebildet ist.

3. Hartschalenbatteriegehäuse nach Anspruch 1 oder 2, wobei der Gehäusegrundkörper (11) einen doppelten Boden (11a,11b) mit einem äußeren Bodenabschnitt (11a) und einem inneren Bodenabschnitt (11b) aufweist, wobei der Temperiermittelkanal (13) zwischen dem äußeren Bodenabschnitt (11a) und dem inneren Bodenabschnitt (11 b) ausgebildet ist.

4. Hartschalenbatteriegehäuse nach einem der Ansprüche 1 bis 3, wobei zwischen dem äußeren Wandabschnitt (11a) und dem inneren Wandabschnitt (11 b) mindestens ein Zwischenwandabschnitt (11 c) ausgebildet ist, insbesondere um welche die Strömungsrichtung des Temperiermittelkanals (13) umlenkbar ist.

5. Hartschalenbatteriegehäuse nach einem der Ansprüche 1 bis 4, wobei der Temperiermittelkanal (14) mäanderförmig ausgebildet ist.

6. Hartschalenbatteriegehäuse nach einem der Ansprüche 1 bis 5, wobei der Gehäusegrundkörper (11) einen Zuleitungsanschluss (13a) zum Anschließen einer Temperiermittel zuführenden Leitung an den Temperiermittelkanal (13) und einen Ableitungsanschluss (13b) zum Anschließen einer Temperiermittel ableitenden Leitung an den Temperiermittelkanal (13) aufweist.

7. Hartschalenbatteriegehäuse nach einem der Ansprüche 1 bis 6, wobei der Gehäusegrundkörper (11) und der Gehäusedeckel (12) zumindest im Wesentlichen aus Kunststoff ausgebildet sind.

8. Hartschalenbatteriegehäuse nach einem der Ansprüche 1 bis 7, wobei der Gehäusegrundkörper (11) und der Gehäusedeckel (12) mindestens eine Dampfsperrschicht (14) umfassen.

9. Hartschalenbatteriegehäuse nach einem der Ansprüche 1 bis 8,
wobei zumindest die im geschlossenen Zustand des Gehäuses innen liegenden, den Innenraum begrenzenden Flächen des Gehäusegrundkörpers (11) oder des Gehäusegrundkörpers (12) und des Gehäusedeckels (12) mit einer Dampfsperrschicht (14) bedeckt sind, und/oder wobei die Dampfsperrschicht (14) in den Kunststoff des Gehäusegrundkörpers (11) oder des Gehäusegrundkörpers (11) und des Gehäusedeckels (12) integriert ist, wobei die Dampfsperrschicht (14) derart in den Kunststoff des Gehäusegrundkörpers (11) beziehungsweise des Gehäusedeckels (12) integriert ist, dass die Dampfsperrschicht (14) den Gehäuseinnenraum im geschlossenen Zustand des Gehäuses im Wesentlichen vollständig umgibt.

10. Hartschalenbatteriegehäuse nach 8 oder 9, wobei die Dampfsperrschicht (14) eine metallische, organische, polymere oder gläserne Schicht ist.

11. Hartschalenbatteriegehäuse nach einem der Ansprüche 1 bis 10, wobei der Innenraum des Gehäusegrundkörpers (11) durch eine oder mehrere darin ausgebildete Kunststofftrennwände (15) in voneinander separierte Fächer (F) unterteilt ist, wobei die Fächer (F) jeweils zur Aufnahme der Zellkomponenten (30) einer Alkalimetallzelle, insbesondere eines (Lithiumionen-)Zellwickels, ausgelegt sind.

12. Hartschalenbatteriegehäuse nach einem der Ansprüche 1 bis 11, wobei der Gehäusegrundkörper (11) und der Gehäusedeckel (12) Verbindungselemente (Z) aufweisen, welche dazu ausgelegt sind beim Verschließen des Gehäuses eine Nut-Feder-Steckverbindung auszubilden,
insbesondere wobei die Verbindungselemente (Z) zum Ausbilden der Nut-Feder-Steckverbindung die Innenraumöffnung des Gehäusegrundkörpers (11) umlaufen,
insbesondere wobei die Verbindungselemente (Z) zum Ausbilden der Nut-Feder-Steckverbindung mit der Dampfsperrschicht (14) bedeckt beziehungsweise mit einer darin integrierten Dampfsperrschicht (14) versehen sind.

13. Galvanisches Element, umfassend ein Hartschalenbatteriegehäuse nach einem der Ansprüche 1 bis 12, wobei in dem Innenraum des Gehäusegrundkörpers (11) des Hartschalenbatteriegehäuses die Zellkomponenten (30) von mindestens zwei Alkalimetallzellen, insbesondere mindestens zwei (Lithiumionen-)Zellwickel, angeordnet sind.

14. Galvanisches Element nach Anspruch 13,
wobei der Innenraum des Gehäusegrundkörpers (11) durch eine oder mehrere darin ausgebildete Kunststofftrennwände (15) in voneinander separierte Fächer (F) unterteilt ist,
wobei die Zellkomponenten (30) der Alkalimetallzellen, insbesondere die (Lithiumionen-)Zellwickel, in unterschiedlichen Fächern (F) angeordnet sind.

15. Galvanisches Element nach Anspruch 13 oder 14,
wobei die Zellkomponenten (30) der Alkalimetallzellen, insbesondere die Lithiumionenzellwickel, jeweils getrennt voneinander in Kunststoffverpackungsfolien (36) verpackt sind,
wobei die in Kunststoffverpackungsfolien (36) verpackten Zellkomponenten (30) der Alkalimetallzellen, insbesondere (Lithiumionen-)Zellwickel, in dem Gehäusegrundkörper (11) angeordnet sind,
insbesondere wobei die Kunststoffverpackungsfolien (36) mindestens ein polar modifiziertes, insbesondere gepfropftes, Polyolefin, insbesondere Maleinsäure gepfropftes Polypropylen, umfasst,
insbesondere wobei die Kunststoffverpackungsfolien (36) jeweils mit mindestens einer Dampfsperrschicht (14) ausgestattet sind.
